# FASCICULE DE BREVET EUROPEEN

(11) **EP 1 634 745 B1**
(45) Date de publication et mention de la délivrance du brevet: **06.01.2010**
(21) Numéro de dépôt: 05291782.0
(22) Date de dépôt: 25.08.2005
(51) Int. Cl.: B60J 5/10

(54) **Véhicule automobile en particulier de type break comportant une porte arrière à deux ouvrants**
Motorfahrzeug, insbesondere Kombiwagen mit einer Hintertür mit zwei Flügeln
Motor vehicle in particular estate car comprising a rear door with two closure members

(30) Priorité: 14.09.2004 FR 0409742
(43) Date de publication de la demande: 15.03.2006
(73) Titulaire: Peugeot Citroën Automobiles SA, 78140 Vélizy-Villacoublay (FR)
(72) Inventeur: Jeuffe, Gérard, 78810 Feucherolles (FR); Betourne, Muriel, 28410 Bû (FR)

(56) Documents cités:
- EP-A- 0 196 968
- DE-A1- 19 615 540
- FR-A- 2 642 381
- FR-A- 2 684 347
- FR-A- 2 806 969
- FR-A- 2 840 579
- US-A- 6 007 139
- US-A1- 2003 122 399

## Description

L'invention concerne un véhicule automobile, en particulier de type break comportant une porte arrière à deux ouvrants.

Dans la conception des véhicules automobiles de type break, on cherche généralement à disposer, à l'arrière du véhicule, d'une ouverture de grandes dimensions pour pouvoir assurer le chargement d'objets encombrants dans le coffre et/ou la partie arrière de l'habitacle du véhicule automobile.

Une telle porte arrière est généralement constituée par un hayon en tôle monté pivotant sur la carrosserie autour d'un axe de direction transversale qui peut être situé au niveau de la partie supérieure de la carrosserie appelée pavillon. Le hayon en tôle comporte généralement une ouverture pour une vitre arrière du véhicule automobile.

Il peut être avantageux de prévoir une vitre arrière montée pivotante sur la carrosserie du véhicule automobile autour d'un axe transversal qui peut être l'axe de pivotement du hayon en tôle, de manière qu'on puisse réaliser l'ouverture du hayon de manière indépendante de l'ouverture de la vitre arrière, ce qui permet de réaliser le chargement de la partie arrière du véhicule, par exemple d'un coffre, tout en laissant la vitre arrière fermée pour isoler l'habitacle du milieu extérieur. Un tel dispositif est décrit en particulier dans le EP-0.196.968.

On peut également prévoir une vitre arrière supplémentaire assurant l'isolation de l'habitacle lors de l'ouverture du hayon, comme décrit dans le FR-2.642.381.

On connaît également par le FR-2.840.579 une porte arrière de véhicule automobile comportant une vitre et une porte de coffre montées articulées autour d'axe transversaux situés respectivement au niveau du pavillon et au niveau du plancher de l'habitacle. La vitre arrière peut être relevée en position horizontale au niveau du pavillon puis déplacée par coulissement au-dessus d'un toit ouvrant puis avec le toit ouvrant vers l'avant du véhicule automobile. En basculant la porte de coffre vers l'arrière, on dispose alors d'une très grande ouverture de chargement du véhicule automobile. Toutefois, un tel véhicule automobile présente une forme de réalisation inhabituelle et sensiblement différente de celle d'un break à hayon basculant.

US 2003/0122399 (SEKSARIA) décrit le préambule de la revendication 1.

Dans le cas de véhicules récents, en particulier haut de gamme, on prévoit une vitre arrière présentant une inclinaison importante par rapport à la verticale, de manière à accroître la surface vitrée, à l'arrière, sans augmenter la hauteur du véhicule automobile et à donner une esthétique satisfaisante au véhicule.

Dans le cas de tels véhicules automobiles de type break, il peut être avantageux de prévoir une ouverture de la vitre arrière indépendante de l'ouverture de l'ensemble du hayon, par exemple pour accéder à la partie arrière de l'habitacle, pour le chargement d'objets ou pour accéder à la partie arrière de l'habitacle.

Dans le cas de véhicules automobiles comportant une vitre arrière fortement inclinée par rapport à la verticale, on ne dispose que d'une ouverture arrière de hauteur réduite et d'un dégagement insuffisant pour le chargement d'objets encombrants.

On ne connaissait donc pas jusqu'ici de véhicules automobiles haut de gamme de type break permettant d'assurer un très bon dégagement d'une ouverture arrière de la carrosserie du véhicule, soit par ouverture du hayon et d'une vitre arrière dans leur ensemble, soit par ouverture de la vitre arrière indépendamment du hayon.

Le but de l'invention est donc de proposer un véhicule automobile, en particulier de type break, comportant une carrosserie ayant une ouverture arrière s'étendant vers le bas jusqu'à un plancher d'un habitacle délimité par la carrosserie et une porte arrière destinée à recouvrir l'ouverture arrière comportant une partie en tôle constituant un hayon monté articulé autour d'un axe transversal au niveau d'une partie supérieure sensiblement horizontale de la carrosserie appelée pavillon du véhicule et comprenant une ouverture de vitre arrière et une vitre arrière montée pivotante autour de l'axe transversal de pivotement du hayon de manière indépendante, pour que la vitre arrière puisse être déplacée entre une position abaissée de fermeture et une position relevée d'ouverture, soit avec le hayon, soit indépendamment du hayon, de manière à assurer un très bon accès à l'intérieur de l'habitacle par l'ouverture arrière.

Dans ce but :
- l'ouverture arrière s'étend vers l'avant du véhicule sur une partie arrière du pavillon, l'axe de pivotement du hayon et de la vitre arrière étant placé sensiblement suivant un bord de la partie arrière du pavillon, et
- la porte arrière comporte :
   - un premier ouvrant constitué par le hayon qui comprend une partie de fermeture de la partie arrière ouverte du pavillon, et
   - un second ouvrant qui comprend la vitre arrière et une partie en tôle, de montage articulé du second ouvrant et de recouvrement de la partie du premier ouvrant assurant la fermeture du pavillon, dans une position rabattue du second ouvrant sur la surface extérieure du hayon.

Selon des modalités plus particulières qui peuvent être prises isolément ou en combinaison :
- le véhicule automobile comporte sur chacun des côtés latéraux du véhicule automobile une paire de vérins comprenant un premier vérin de rappel et de maintien du hayon de la porte arrière et un second vérin de rappel et de maintien du second ouvrant de la porte arrière comportant la vitre arrière, montés mobiles en rotation par rapport à la carrosserie entre une première position dans laquelle la tige du vérin est déployée et la direction axiale d'actionnement du vérin sensiblement verticale et une seconde position dans laquelle la tige du vérin est rétractée et la direction axiale d'actionnement du vérin sensiblement horizontale, la première position des vérins correspondant à une position d'ouverture du hayon et du second ouvrant, respectivement, et la seconde position du premier et du second vérins correspondant à une position de fermeture du hayon et à une position rabattue du second ouvrant sur le hayon, respectivement, l'un au moins du premier et du second vérins étant disposé à l'intérieur d'un logement ménagé dans un côté latéral de la carrosserie, dans sa seconde position.
- les vérins comportent chacun un corps de vérin monté articulé par l'intermédiaire d'une rotule sphérique sur la carrosserie du véhicule automobile et une tige de vérin montée articulée par l'intermédiaire d'une articulation sphérique, respectivement, sur une partie latérale du hayon et une partie latérale du second ouvrant.
- la première rotule de fixation du premier vérin et la seconde rotule de fixation du second vérin d'une paire de vérins sont montées en saillie dans la direction transversale vers l'intérieur sur un rebord latéral de la carrosserie du véhicule automobile, la rotule de montage du corps du premier vérin dont la tige est reliée au hayon étant en saillie dans la direction transversale vers l'intérieur du véhicule sur une longueur plus grande que la seconde rotule de montage articulé du second vérin dont la tige est reliée au second ouvrant.
- la tige du premier vérin et la tige du second vérin sont reliées respectivement au hayon et au second ouvrant dans des positions telles qu'en position repliée, le second vérin se trouve au-dessus du premier vérin et présente une direction axiale d'actionnement dans un second plan sensiblement longitudinal du véhicule disposé angulairement par rapport à un premier plan sensiblement longitudinal du véhicule automobile dans lequel est située la direction axiale d'actionnement du premier vérin, les directions axiales du premier vérin et du second vérin se déplaçant, pendant la rotation du premier vérin et du second vérin entre leurs positions déployée et rétractée, dans un premier et dans un second plans de rotation sensiblement longitudinaux du véhicule automobile, le premier et le second plans de rotation du premier et du second vérins étant disposés angulairement l'un par rapport à l'autre.
- chacun des premiers vérins et des seconds vérins est disposé dans la position déployée d'ouverture du hayon et du second ouvrant de manière angulaire par rapport à une direction verticale, la direction axiale d'actionnement du premier vérin et la direction axiale d'actionnement du second vérin de chaque paire de vérins étant inclinées en sens inverse par rapport à la direction verticale.
- la vitre arrière du second ouvrant est fixée suivant l'un des bords de direction transversale de la partie en tôle du second ouvrant, de manière à prolonger le second ouvrant et recouvrir l'ouverture de vitre arrière du hayon dans la position rabattue du second ouvrant sur le premier ouvrant ou hayon.

Afin de bien faire comprendre l'invention, on va décrire à titre d'exemple, en se référant aux figures jointes en annexe, un véhicule automobile de type break suivant l'invention.

La figure 1 est une demi-vue de face en élévation de l'arrière de la carrosserie du véhicule automobile.

La figure 2 est une vue en élévation latérale avec arrachement de l'arrière de la carrosserie.

La figure 3 est une vue en perspective de trois-quarts de l'arrière du véhicule automobile dans une position d'ouverture de la vitre arrière, indépendamment du hayon.

La figure 4 est une vue en perspective de trois-quarts de la partie arrière du véhicule dans une position d'ouverture du hayon et de la vitre arrière dans leur ensemble.

La figure 5 est une vue de côté de la partie arrière du véhicule automobile dans la position d'ouverture du hayon et de la vitre arrière dans leur ensemble.

La figure 6 est une vue en plan de deux vérins de maintien et de rappel du hayon et de la vitre arrière dans une position repliée de fermeture du hayon et de la vitre arrière.

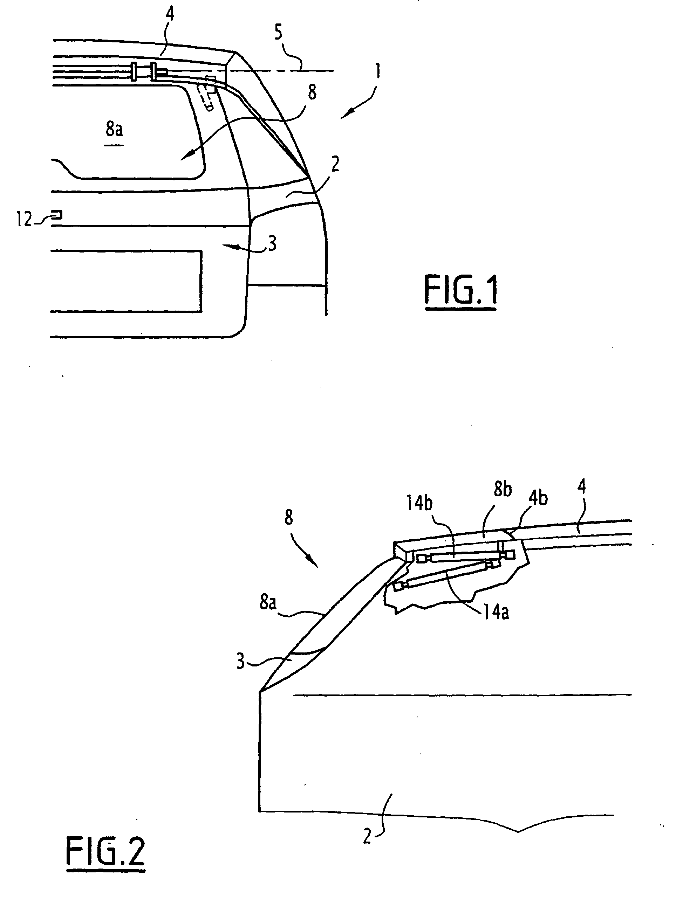

Sur les figures 1 et 2, on voit la partie arrière de la carrosserie 2 du véhicule automobile qui comporte une partie fixe constituée elle-même de deux parties latérales constituant les ailes arrière du véhicule automobile et une partie supérieure 4 peu inclinée par rapport au plan horizontal constituant le toit ou pavillon du véhicule automobile.

La carrosserie du véhicule automobile comporte également une porte arrière 3 montée basculante autour d'un axe 5 horizontal de direction transversale situé au niveau d'une partie du pavillon 4.

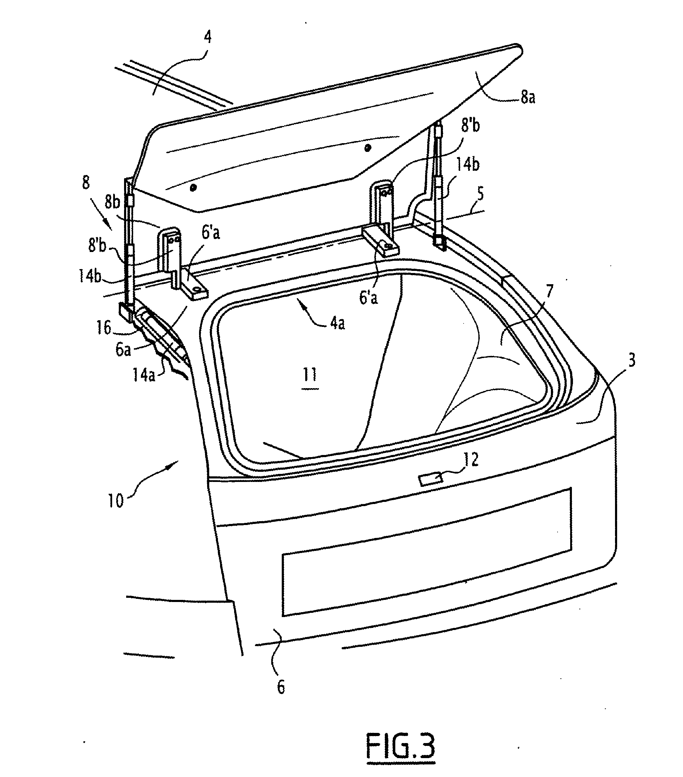

Comme il est visible en particulier sur la figure 3, la porte arrière 3 du véhicule automobile réalisée suivant l'invention comporte un premier ouvrant 6 constitué par un hayon en tôle comportant une ouverture de vitre arrière 7 et un second ouvrant 8 comportant en particulier la vitre arrière 8a destinée à venir recouvrir l'ouverture de vitre arrière 7 en position de fermeture telle que représentée sur les figures 1 et 2.

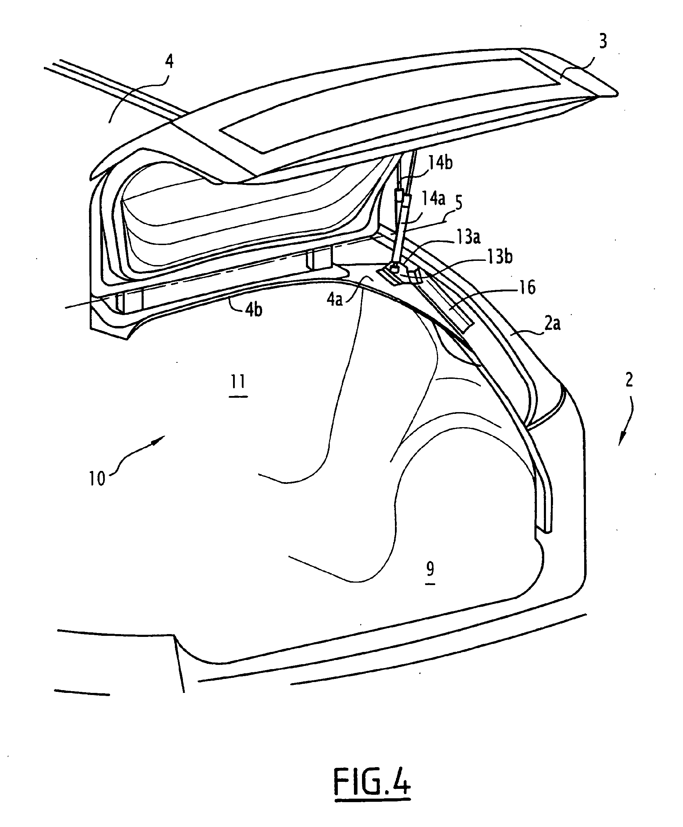

Comme représenté en particulier sur la figure 4, l'ouverture arrière 10 de la carrosserie 2 du véhicule automobile s'étend suivant une partie arrière 4a du pavillon 4 qui présente un bord 4b délimitant l'ouverture 10 vers l'avant du véhicule automobile. L'axe de pivotement 5 de la porte arrière 3 est situé au voisinage du bord 4b de la partie arrière 4a du pavillon 4 de manière que, dans la position d'ouverture de la porte arrière 3, comme représenté sur la figure 4, l'ouverture 10 soit totalement dégagée et assure un très bon accès au coffre 9 et à l'habitacle 11 du véhicule automobile.

Comme il est visible sur la figure 3, le hayon en tôle 6 comporte, au-dessus de l'ouverture de vitre arrière 7, une partie en tôle 6a destinée à recouvrir en position de fermeture du hayon 6 (tel que représenté sur la figure 3) la partie arrière 4a du pavillon 4.

Le second ouvrant 8 comporte une partie en tôle 8b sur laquelle est fixée la vitre 8a suivant un côté de la partie en tôle 8b de direction transversale. Le second ouvrant 8 est monté pivotant autour de l'axe 5 par l'intermédiaire de la partie en tôle 8b. Le hayon en tôle 6 comporte deux charnières 6'a fixées, par exemple par soudure, sur sa partie 6a qui sont engagées sur des tourillons fixés sur la carrosserie 2 et alignés suivant l'axe de pivotement 5.

Le second ouvrant 8 comporte des charnières 8'b fixées sur sa partie en tôle 8b, par exemple par soudure, qui sont engagées sur des tourillons fixés sur la carrosserie 2 et également alignés suivant l'axe 5. De cette manière, les deux ouvrants sont montés pivotants sur un même axe 5, lui-même situé au voisinage ou légèrement à l'avant du bord antérieur 4b de la partie arrière 4a du pavillon délimitant l'ouverture arrière 10 du véhicule automobile qui peut être ainsi totalement dégagée par ouverture de l'ensemble de la porte arrière. En position de fermeture complète du véhicule automobile telle que représentée sur les figures 1 et 2, ou en position d'ouverture de la porte arrière dans son ensemble, le second ouvrant 8 est rendu solidaire du hayon 6 par un élément de verrouillage 12 qui comporte une serrure de verrouillage et un bouton de commande manuel.

Dans la position rabattue et fermée du second ouvrant sur le premier ouvrant, la partie 8b en tôle du second ouvrant vient recouvrir la partie 6a du hayon 6 à l'avant et au-dessus de l'ouverture de vitre arrière 7. De préférence, le dispositif de verrouillage 12 du second ouvrant 8 est fixé sur le hayon 6, en dessous du bord inférieur de l'ouverture de vitre 7. Sur le bord arrière de la vitre 8a est fixée une patte de verrouillage destinée à coopérer avec le dispositif de verrouillage 12. Un joint d'étanchéité qui est fixé suivant le bord de l'ouverture de vitre arrière 7 permet d'assurer une fermeture totalement étanche de l'ouverture arrière lorsque la vitre 8a est en position rabattue et verrouillée sur le hayon 6.

La carrosserie 2 comporte de part et d'autre de l'ouverture arrière 10, suivant les côtés latéraux du véhicule automobile, deux bords relevés 2a délimitant latéralement la partie arrière 4a du pavillon 4 et une zone d'appui du hayon 6 en position de fermeture, avec interposition d'un joint d'étanchéité du hayon.

Sur chacun des bords latéraux, dans leur partie supérieure, sont fixées une première et une seconde rotules 13a, 13b pour le montage articulé, respectivement, du corps d'un premier vérin à gaz 14a et du corps d'un second vérin à gaz 14b dans chacun desquels est montée mobile, dans une direction axiale d'actionnement, une tige de vérin assurant le rappel et le maintien, respectivement, du hayon 6 et du second ouvrant 8 comportant la vitre 8a, dans leur position d'ouverture, comme représenté sur la figure 4.

Les rotules 13a de fixation des premiers vérins 14a sur les bords latéraux 2a de la carrosserie 2 sont fixées en saillie vers l'intérieur, chacune par rapport au bord correspondant 2a de la carrosserie 2, par l'intermédiaire d'une patte de fixation. Les rotules 13b de fixation du second vérin 14b de rappel et de maintien du second ouvrant 8 sont fixées en saillie, directement sur le bord 2a correspondant de la carrosserie 2. Les rotules 13a de montage articulé des vérins 14a montées sur des pattes de fixation sont disposées en saillie vers l'intérieur sur une plus grande longueur que les rotules 13b de montage des seconds vérins 14b.

Les corps des vérins 14a et 14b sont engagés sur les rotules correspondantes et les tiges des vérins sont fixées également de manière rotulante sur une partie latérale respective du hayon 6 et de la partie 8b du second ouvrant 8.

En position d'ouverture complète de la porte arrière 3, les axes d'actionnement des vérins de rappel et de maintien 14a et 14b sont inclinés dans des sens différents par rapport à un axe vertical, de manière à assurer un maintien efficace du premier et du second ouvrant tout en étant écartés l'un de l'autre de manière à ne pouvoir interférer.

Les points de montage rotulant des corps des vérins 14a et 14b, comme indiqué plus haut, sont situés dans des plans longitudinaux du véhicule automobile espacés l'un de l'autre dans la direction transversale. Les points d'attache des tiges des vérins 14a et 14b sur le premier et sur le second ouvrants, respectivement, sont, en revanche, pratiquement dans un même plan longitudinal pour assurer une fixation latérale satisfaisante du premier et du second ouvrants.

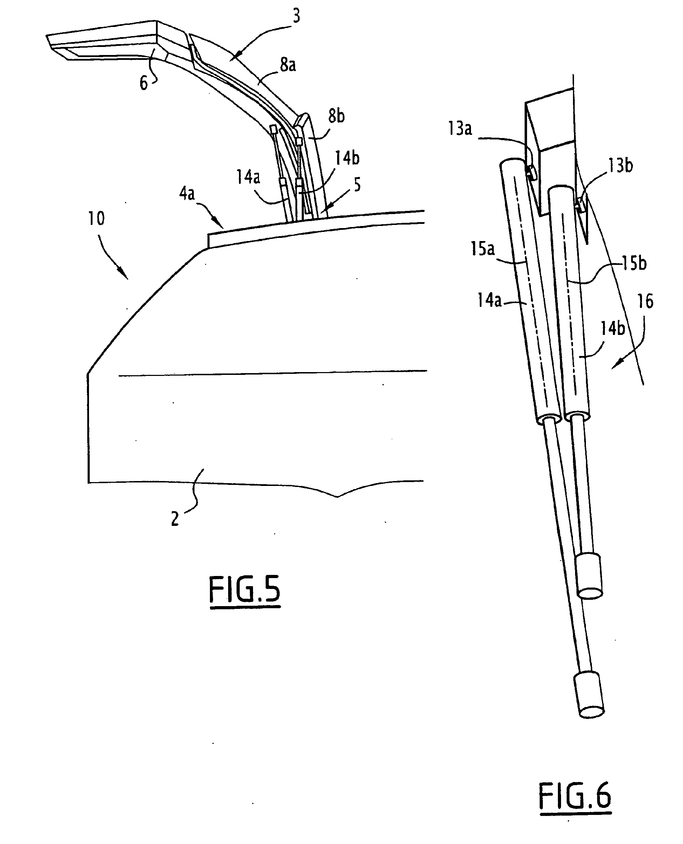

Dans la position rabattue des vérins 14a et 14b, comme représenté sur les figures 1 et 6, le vérin 14b est disposé verticalement au dessus du vérin 14a et les directions axiales d'actionnement des deux vérins 14a et 14b sont dans des dispositions angulaires relatives aussi bien en projection dans un plan vertical (figure 2) que dans un plan horizontal (figure 6).

Un logement 16 pour recevoir les vérins en position rabattue est réalisé le long de chacun des bords 4a du pavillon 4. Comme il est visible sur la figure 3, l'un au moins des vérins (14a) est disposé entièrement à l'intérieur du logement 16, dans sa position repliée et rabattue.

Les plans de rotation des axes d'actionnement des vérins 14a et 14b entre leur position d'ouverture (figure 5) et leur position de fermeture (figure 2) sont des plans sensiblement longitudinaux faisant entre eux un angle faible, de telle sorte que les vérins ne peuvent interférer, ce qui gênerait le déplacement et la mise en place des corps de vérins, au cours de l'ouverture et de la fermeture des ouvrants et dans les positions d'ouverture et de fermeture. En outre, les vérins permettent d'obtenir une parfaite stabilité des ouvrants en position d'ouverture, du fait qu'à chacun des ouvrants sont associés deux vérins de rappel et de maintien disposés de part et d'autre de l'ouvrant sur les côtés latéraux du véhicule automobile. Dans leur position repliée correspondant à la position de fermeture des ouvrants, les deux vérins 14a sont logés dans les logements latéraux 16 de la carrosserie délimités par les bords latéraux relevés 2a dans la partie de carrosserie entourant l'ouverture 10 comportant en particulier la partie d'extrémité arrière 4a du toit ouvrant 4. En position de fermeture, le hayon 6 qui comporte un joint périphérique vient en appui étanche sur la partie de carrosserie entourant l'ouverture 10.

L'utilisation des deux ouvrants de la porte arrière sera maintenant décrite en référence à l'ensemble des figures.

On supposera que la porte arrière 3 est totalement fermée, comme représenté sur les figures 1 et 2, à l'instant initial.

Si l'on désire accéder à l'habitacle 11 du véhicule automobile ou ouvrir la fenêtre arrière 8a pour toute autre raison, on actionne de l'extérieur du véhicule automobile le bouton de verrouillage 12, ce qui entraîne le déplacement par pivotement vers le haut du second ouvrant 8 comportant la vitre 8a, sous l'effet des vérins de rappel 14b, comme représenté sur la figure 3. On peut alors accéder à l'intérieur de l'habitacle 11 du véhicule automobile par l'ouverture 7 de la vitre arrière 8a sans risquer de heurter la vitre 8a qui est en position haute et qui est séparée de la partie supérieure de l'ouverture 7 par la partie en tôle 8b.

Le hayon 3 est resté en position fermée. Il est à remarquer que si l'on actionne le dispositif de verrouillage et de déverrouillage 15 du hayon 3, on ne peut obtenir l'ouverture du hayon qui est condamné en position de fermeture, lorsque le second ouvrant 8 est en position d'ouverture. Le hayon rappelé en position d'ouverture par les vérins 14a ne risque donc pas de venir heurter la vitre 8a en position d'ouverture.

Si l'on désire réaliser l'ouverture complète de la porte arrière 3, comme représenté sur les figures 3 et 4, il est nécessaire de rabattre préalablement le second ouvrant, de manière à verrouiller le second ouvrant sur le hayon 6 par l'intermédiaire du dispositif de verrouillage 12. On peut alors actionner la poignée de déverrouillage du hayon 6 et déplacer l'ensemble du premier et du second ouvrants de la position de fermeture à la position d'ouverture, tel que représenté sur les figures 4 et 5. Le déplacement est assisté par les vérins de rappel 14a et 14b qui se déplacent en rotation dans deux plans sensiblement longitudinaux différents faisant entre eux un angle faible et se déploient jusqu'à la position de maintien de la porte arrière 3 en position d'ouverture complète telle que représenté sur la figure 5. On peut alors accéder au coffre 9 et à la partie arrière de l'habitacle 11 du véhicule automobile par l'ouverture arrière 10 s'étendant vers le haut et vers l'avant dans la partie arrière 4a du pavillon 4. On dispose alors d'un large espace d'accès et de chargement du véhicule automobile de type break.

La porte arrière 3 peut être refermée par simple traction à l'encontre de la force de rappel des vérins 14a et 14b pour la déplacer par pivotement jusqu'à son verrouillage en position de fermeture complète.

Pendant le déplacement de fermeture, les vérins 14a et 14b se déplacent en rotation dans des plans sensiblement longitudinaux faisant entre eux un angle aigu faible, de manière que les tiges des vérins se replient pour venir dans la position de fermeture complète telle que représentée sur les figures 1 et 6, les vérins étant disposés l'un au-dessus de l'autre et dans des plans sensiblement longitudinaux décalés latéralement et angulairement, comme représenté sur la figure 6.

Dans la position de fermeture complète de la porte arrière, la partie 6a du hayon en tôle vient recouvrir la partie arrière 4a du pavillon et la partie en tôle 8b du second ouvrant 8 solidaire de la vitre 8a vient se superposer à la partie 6a du hayon 6.

Le véhicule automobile selon l'invention est donc un véhicule de type break d'une nouvelle conception comportant une porte arrière permettant d'accéder à l'intérieur du véhicule automobile par une ouverture de grandes dimensions s'étendant sur une partie du pavillon et d'ouvrir une vitre de la porte arrière indépendamment de la porte dans son ensemble pour accéder facilement à l'intérieur de l'habitacle, tout en permettant d'obtenir une très bonne esthétique du véhicule automobile qui peut comporter en particulier une vitre arrière fortement inclinée.

L'invention ne se limite pas strictement au mode de réalisation qui a été décrit.

En particulier, l'invention s'applique à tout véhicule automobile comportant une porte arrière destinée à recevoir une vitre ou lunette. En particulier, l'invention s'applique à un véhicule automobile comportant un toit ouvrant disposé dans la direction longitudinale du véhicule dans le prolongement de la partie arrière du pavillon.

## Revendications

1. Véhicule automobile, en particulier de type break, comportant une carrosserie (2) ayant une ouverture arrière (10) s'étendant vers le bas jusqu'à un plancher d'un habitacle (11) délimité par la carrosserie (2) et une porte arrière (3) destinée à recouvrir l'ouverture arrière (10) comportant une partie en tôle constituant un hayon (6) monté articulé autour d'un axe transversal (5) au niveau d'une partie supérieure (4) sensiblement horizontale de la carrosserie (2) appelée pavillon du véhicule et comprenant une ouverture de vitre arrière (7) et une vitre arrière (8a) montée pivotante autour de l'axe transversal (5) de pivotement du hayon (6) de manière indépendante, pour que la vitre arrière (8a) puisse être déplacée entre une position abaissée de fermeture et une position relevée d'ouverture, soit avec le hayon (6), soit indépendamment du hayon (6), **caractérisé par le fait :**
- **que** l'ouverture arrière (10) s'étend vers l'avant du véhicule sur une partie arrière (4a) du pavillon (4), l'axe de pivotement (5) du hayon (6) et de la vitre arrière (8a) étant placé sensiblement suivant un bord (4b) de la partie arrière (4a) du pavillon (4), et
- **que** la porte arrière comporte :
• un premier ouvrant (6) constitué par le hayon qui comprend une partie (6a) de fermeture de la partie arrière (4a) ouverte du pavillon (4), et
• un second ouvrant (8) qui comprend la vitre arrière (8a) et une partie en tôle (8b), de montage articulé du second ouvrant (8) et de recouvrement de la partie (6a) du premier ouvrant (6) assurant la fermeture de la partie arrière (4a) du pavillon (4), dans une position rabattue du second ouvrant (8) sur la surface extérieure du hayon (6).

2. Véhicule automobile suivant la revendication 1, **caractérisé par le fait qu'**il comporte sur chacun des côtés latéraux du véhicule automobile une paire de vérins (14a, 14b) comprenant un premier vérin (14a) de rappel et de maintien du hayon (6) de la porte arrière (3) et un second vérin (14b) de rappel et de maintien du second ouvrant (8) de la porte arrière (3) comportant la vitre arrière (8a), montés mobiles en rotation par rapport à la carrosserie (2) entre une première position dans laquelle la tige du vérin (14a, 14b) est déployée et la direction axiale d'actionnement du vérin sensiblement verticale et une seconde position dans laquelle la tige du vérin est rétractée et la direction axiale d'actionnement du vérin sensiblement horizontale, la première position des vérins (14a, 14b) correspondant à une position d'ouverture du hayon (6) et du second ouvrant (8), respectivement, et la seconde position du premier et du second vérins (14a, 14b) correspondant à une position de fermeture du hayon (6) et à une position rabattue du second ouvrant (8) sur le hayon (6), respectivement, l'un au moins du premier et du second vérins (14a, 14b) étant disposé dans un logement (16) ménagé dans le côté latéral de la carrosserie (2), dans sa seconde position.

3. Véhicule automobile suivant la revendication 2, **caractérisé par le fait que** les vérins (14a, 14b) comportent chacun un corps de vérin monté articulé par l'intermédiaire d'une rotule sphérique sur la carrosserie (2) du véhicule automobile et une tige de vérin montée articulée par l'intermédiaire d'une articulation sphérique, respectivement, sur une partie latérale du hayon (6) et une partie latérale du second ouvrant (8).

4. Véhicule automobile suivant la revendication 3, **caractérisé par le fait que** la première rotule de fixation (13a) du premier vérin (14a) et la seconde rotule de fixation (13b) du second vérin (14b) d'une paire de vérins sont montées en saillie dans la direction transversale vers l'intérieur sur un rebord latéral (2a) de la carrosserie (2) du véhicule automobile, la rotule (13a) de montage du corps du premier vérin (14a) dont la tige est reliée au hayon (6) étant en saillie dans la direction transversale vers l'intérieur du véhicule sur une longueur plus grande que la seconde rotule (13b) de montage articulé du second vérin (14b) dont la tige est reliée au second ouvrant (8).

5. Véhicule automobile suivant la revendication 4, **caractérisé par le fait que** la tige du premier vérin (14a) et la tige du second vérin (14b) sont reliées respectivement au hayon (6) et au second ouvrant (8) dans des positions telles qu'en position repliée, le second vérin (14b) se trouve au-dessus du premier vérin (14a) et présente une direction axiale d'actionnement dans un second plan sensiblement longitudinal du véhicule disposé angulairement par rapport à un premier plan sensiblement longitudinal du véhicule automobile dans lequel est située la direction axiale d'actionnement du premier vérin (14a), les directions axiales du premier vérin (14a) et du second vérin (14b) se déplaçant, pendant la rotation du premier vérin (14a) et du second vérin (14b) entre leurs positions déployée et rétractée, dans un premier et dans un second plans de rotation sensiblement longitudinaux du véhicule automobile, le premier et le second plans de rotation du premier et du second vérins étant disposés angulairement l'un par rapport à l'autre.

6. Véhicule automobile suivant l'une quelconque des revendications 2 à 5, **caractérisé par le fait que** chacun des premiers vérins (14a) et des seconds vérins (14b) est disposé dans la position déployée d'ouverture du hayon (6) et du second ouvrant (8) de manière angulaire par rapport à une direction verticale, la direction axiale d'actionnement du premier vérin (14a) et la direction axiale d'actionnement du second vérin (14b) de chaque paire de vérins étant inclinées en sens inverse par rapport à la direction verticale.

7. Véhicule automobile suivant l'une quelconque des revendications 1 à 6, **caractérisé par le fait que** la vitre arrière (8a) du second ouvrant (8) est fixée suivant l'un des bords de direction transversale de la partie en tôle (8b) du second ouvrant, de manière à prolonger le second ouvrant (8) et recouvrir l'ouverture de vitre arrière (7) du hayon (6) dans la position rabattue du second ouvrant (8) sur le premier ouvrant ou hayon (6).

## Claims

1. Motor vehicle, in particular of the estate car type, comprising a body (2) having a rear opening (10) extending downwards to a floor of a passenger compartment (11) defined by the body (2) and a rear door (3) designed to cover the rear opening (10) comprising a sheet metal portion forming a tailgate (6) mounted such that it can pivot about a transverse axis (5) on a generally horizontal upper portion (4) of the body (2) called the roof of the vehicle and including a rear window opening (7) and a rear window (8a) mounted such that it can pivot about the transverse pivot axis (5) of the tailgate (6) independently, so that the rear window (8a) can be moved between a lowered closed position and a raised open position, either with the tailgate (6), or independently of the tailgate (6), **characterized in that**:
- the rear opening (10) extends towards the front of the vehicle on a rear portion (4a) of the roof (4), the pivot axis (5) of the tailgate (6) and the rear window (8a) being located generally along an edge (4b) of the rear portion (4a) of the roof (4); and
- the rear door comprises:
• a first opening element (6) formed by the tailgate which includes a portion (6a) for closing the open rear portion (4a) of the roof (4); and
• a second opening element (8) which includes the rear window (8a) and a sheet metal portion (8b), for hinged mounting of the second opening element (8) and for covering the portion (6a) of the first opening element (6) closing the rear portion (4a) of the roof (4), in a position of the second opening element (8) folded down on the outer surface of the tailgate (6).

2. Motor vehicle according to Claim 1, **characterized in that** it comprises on each of the lateral sides of the motor vehicle a pair of struts (14a, 14b) including a first strut (14a) to lift and hold the tailgate (6) of the rear door (3) and a second strut (14b) to lift and hold the second opening element (8) of the rear door (3) comprising the rear window (8a), mounted such that they can rotate in relation to the body (2) between a first position in which the rod of the strut (14a, 14b) is deployed and the axial acting direction of the strut generally vertical and a second position in which the rod of the strut is retracted and the axial acting direction of the strut generally horizontal, the first position of the struts (14a, 14b) corresponding to an open position of the tailgate (6) and the second opening element (8) respectively, and the second position of the first and second struts (14a, 14b) corresponding to a closed position of the tailgate (6) and a position of the second opening element (8) folded down on the tailgate (6) respectively, at least one of the first and second struts (14a, 14b) in its second position being disposed in a recess (16) made in the lateral side of the body (2).

3. Motor vehicle according to Claim 2, **characterized in that** the struts (14a, 14b) comprise each one a strut body mounted such that it can pivot by means of a ball joint on the body (2) of the motor vehicle and a strut rod mounted such that it can pivot by means of a ball-and-socket joint, on a lateral portion of the tailgate (6) and a lateral portion of the second opening element (8) respectively.

4. Motor vehicle according to Claim 3, **characterized in that** the first mounting ball (13a) of the first strut (14a) and the second mounting ball (13b) of the second strut (14b) of a pair of struts are mounted such that they project in the transverse direction towards the inside on a lateral shoulder (2a) of the body (2) of the motor vehicle, the mounting ball (13a) of the body of the first strut (14a), of which the rod is connected to the tailgate (6), projecting in the transverse direction towards the inside of the vehicle for a greater distance than the second pivot mounting ball (13b) of the second strut (14b) of which the rod is connected to the second opening element (8).

5. Motor vehicle according to Claim 4, **characterized in that** the rod of the first strut (14a) and the rod of the second strut (14b) are connected to the tailgate (6) and to the second opening element (8) respectively, in positions such that in the folded position, the second strut (14b) is located above the first strut (14a) and has an axial acting direction in a second generally longitudinal plane of the vehicle disposed at an angle in relation to a first generally longitudinal plane of the motor vehicle in which is located the axial acting direction of the first strut (14a), the axial directions of the first strut (14a) and the second strut (14b) moving, during the rotation of the first strut (14a) and the second strut (14b), between their deployed and retracted positions, in first and second generally longitudinal planes of rotation of the motor vehicle, the first and the second planes of rotation of the first and the second struts being disposed at an angle one in relation to the other.

6. Motor vehicle according to any one of Claims 2 to 5, **characterized in that** each one of the first struts (14a) and the second struts (14b) is disposed in the deployed open position of the tailgate (6) and the second opening element (8) at an angle in relation to a vertical direction, the axial acting direction of the first strut (14a) and the axial acting direction of the second strut (14b) of each pair of struts being inclined in opposite directions in relation to the vertical direction.

7. Motor vehicle according to any one of Claims 1 to 6, **characterized in that** the rear window (8a) of the second opening element (8) is fixed along one of the transverse direction edges of the sheet metal portion (8b) of the second opening element, so as to extend the second opening element (8) and cover the rear window opening (7) of the tailgate (6) in the position of the second opening element (8) folded down on the first opening element or tailgate (6).

## Patentansprüche

1. Kraftfahrzeug, insbesondere vom Typ Kombifahrzeug, das eine Karosserie (2), die eine Hecköffnung (10) hat, welche sich nach unten bis zu einem Boden eines von der Karosserie (2) begrenzten Fahrzeuginnenraums (11) erstreckt, und eine zum Verdecken der Hecköffnung (10) bestimmte Hecktür (3) aufweist, die einen Blechbereich aufweist, der eine Heckklappe (6) bildet, die in Höhe eines Fahrzeugverdeck genannten oberen, im Wesentlichen waagrechten Bereichs (4) der Karosserie (2) um eine Querachse (5) angelenkt ist, und eine Heckfensteröffnung (7) und ein Heckfenster (8a) enthält, das um die Querschwenkachse (5) der Heckklappe (6) unabhängig schwenkbar montiert ist, damit das Heckfenster (8a) zwischen einer abgesenkten Schließstellung und einer angehobenen Öffnungsstellung entweder mit der Heckklappe (6) oder unabhängig von der Heckklappe (6) bewegt werden kann, **dadurch gekennzeichnet:**
- **dass** die Hecköffnung (10) sich zur Vorderseite des Fahrzeugs über einen hinteren Bereich (4a) des Verdecks (4) erstreckt, wobei die Schwenkachse (5) der Heckklappe (6) und des Heckfensters (8a) im Wesentlichen gemäß einem Rand (4b) des hinteren Bereichs (4a) des Verdecks (4) angeordnet ist, und
- **dass** die Hecktür aufweist:
• einen aus der Heckklappe bestehenden ersten Flügel (6), der einen Schließbereich (6a) des offenen Heckbereichs (4a) des Verdecks (4) enthält, und
• einen zweiten Flügel (8), der das Heckfenster (3a) und einen Blechbereich (8b) enthält, mit angelenkter Montage des zweiten Flügels (8) und mit Bedeckung des Bereichs (6a) des ersten Flügels (6), der das Schließen des Heckbereichs (4a) des Verdecks (4) in einer auf die Außenfläche der Heckklappe (6) heruntergeklappten Stellung des zweiten Flügels (8) gewährleistet.

2. Kraftfahrzeug nach Anspruch 1, **dadurch gekennzeichnet, dass** es auf jeder der Seiten des Kraftfahrzeugs ein Paar von Arbeitszylindern (14a, 14b) aufweist, das einen ersten Arbeitszylinder (14a) zum Rückstellen und Halten der Heckklappe (6) der Hecktür (3) und einen zweiten Arbeitszylinder (14b) zum Rückstellen und Halten des das Heckfenster (8a) aufweisenden zweiten Flügels (8) der Hecktür (3) enthält, die zwischen einer ersten Stellung, in der die Kolbenstange des Zylinders (14a, 14b) ausgefahren und die axiale Betätigungsrichtung des Zylinders im Wesentlichen senkrecht ist, und einer zweiten Stellung bezüglich der Karosserie (2) drehbeweglich montiert sind, in der die Kolbenstange des Zylinders eingezogen und die axiale Betätigungsrichtung des Zylinders im Wesentlichen waagrecht ist, wobei die erste Stellung der Zylinder (14a, 14b) einer Öffnungsstellung der Heckklappe (6) bzw. des zweiten Flügels (8) und die zweite Stellung des ersten und des zweiten Zylinders (14a, 14b) einer Schließstellung der Heckklappe (6) bzw. einer auf die Heckklappe (6) umgeklappten Stellung des zweiten Flügels (8) entspricht, wobei mindestens einer der ersten und zweiten Zylinder (14a, 14b) in seiner zweiten Stellung in einer Aufnahme (16) angeordnet ist, die in der Seite der Karosserie (2) ausgespart ist.

3. Kraftfahrzeug nach Anspruch 2, **dadurch gekennzeichnet, dass** die Zylinder (14a, 14b) je einen Zylinderkörper, der mittels einer Kugelgelenkverbindung an die Karosserie (2) des Kraftfahrzeugs angelenkt montiert ist, und eine Zylinderkolbenstange aufweisen, die mittels eines Kugelgelenks an einen Seitenbereich der Heckklappe (6) bzw. einen Seitenbereich des zweiten Flügels (8) angelenkt ist.

4. Kraftfahrzeug nach Anspruch 3, **dadurch gekennzeichnet, dass** das erste Befestigungskugelgelenk (13a) des ersten Zylinders (14a) und das zweite Befestigungskugelgelenk (13b) des zweiten Zylinders (14b) eines Paars von Arbeitszylindern in Querrichtung nach innen vorstehend auf eine seitliche Randleiste (2a) der Karosserie (2) des Kraftfahrzeugs montiert sind, wobei das Kugelgelenk (13a) zur Montage des Körpers des ersten Zylinders (14a), dessen Kolbenstange mit der Heckklappe (6) verbunden ist, in Querrichtung zum Inneren des Fahrzeugs über eine größere Länge als das zweite Kugelgelenk (13b) zur angelenkten Montage des zweiten Zylinders (14b) vorsteht, dessen Kolbenstange mit dem zweiten Flügel (8) verbunden ist.

5. Kraftfahrzeug nach Anspruch 4, **dadurch gekennzeichnet, dass** die Kolbenstange des ersten Zylinders (14a) und die Kolbenstange des zweiten Zylinders (14b) mit der Heckklappe (6) bzw. mit dem zweiten Flügel (8) in solchen Stellungen verbunden sind, dass in der zusammengeklappten Stellung der zweite Zylinder (14b) sich über dem ersten Zylinder (14a) befindet und eine axiale Betätigungsrichtung in einer zweiten, im Wesentlichen längs verlaufenden Ebene des Fahrzeugs hat, die winklig bezüglich einer ersten, im Wesentlichen längs verlaufenden Ebene des Kraftfahrzeugs angeordnet ist, in der sich die axiale Betätigungsrichtung des ersten Zylinders (14a) befindet, wobei die axialen Richtungen des ersten Zylinders (14a) und des zweiten Zylinders (14b) sich während der Drehung des ersten Zylinders (14a) und des zweiten Zylinders (14b) zwischen ihrer ausgefahrenen und eingezogenen Stellung in einer ersten und in einer zweiten im Wesentlichen längs verlaufenden Drehebene des Kraftfahrzeugs verschieben, wobei die erste und die zweite Drehebene des ersten und des zweiten Zylinders winklig zueinander angeordnet sind.

6. Kraftfahrzeug nach einem der Ansprüche 2 bis 5, **dadurch gekennzeichnet, dass** jeder der ersten Zylinder (14a) und der zweiten Zylinder (14b) in der ausgeklappten Öffnungsstellung der Heckklappe (6) und des zweiten Flügels (8) winklig bezüglich einer senkrechten Richtung angeordnet ist, wobei die axiale Betätigungsrichtung des ersten Zylinders {14a) und die axiale Betätigungsrichtung des zweiten Zylinders (14b) jedes Paars von Zylindern in Gegenrichtung bezüglich der senkrechten Richtung geneigt sind.

7. Kraftfahrzeug nach einem der Ansprüche 1 bis 6, **dadurch gekennzeichnet, dass** das Heckfenster (8a) des zweiten Flügels (8) gemäß einem der Ränder in Querrichtung des Blechbereichs (8b) des zweiten Flügels befestigt ist, um den zweiten Flügel (8) zu verlängern und die Heckfensteröffnung (7) der Heckklappe (6) in der auf den ersten Flügel oder Heckklappe (6) umgeklappten Stellung des zweiten Flügels (8) zu bedecken.
